# EUROPÄISCHE PATENTANMELDUNG

(11) **EP 1 675 077 A1**
(43) Veröffentlichungstag der Anmeldung: **28.06.2006**
(21) Anmeldenummer: 05026656.8
(22) Anmeldetag: 07.12.2005
(51) Int. Cl.: G07F 17/24, G08G 1/0968

(54) **Zur Implementierung in einem Computersystem vorgesehenes Verfahren zur Ermittlung optimierter Bahnen eines Fahrzeugs**

(30) Priorität: 17.12.2004 DE 102004061636
(71) Anmelder: EADS Deutschland GmbH, 85521 Ottobrunn (DE)
(72) Erfinder: Henning, Ulrich, Dr., 85622 Feldkirchen (DE); Lohmiller, WInfried, Dr., 81373 München (DE); Walsdorf, Anton, Dr., 85591 Vaterstetten (DE)

(57) **Zusammenfassung**

Zur Implementierung in ein Computersystem vorgesehenes Verfahren zur Ermittlung optimierter Bahnen eines Fahrzeugs mit folgenden Schritten:
(a) Bewertung sämtlicher Knoten oder Gitterpunkte des vorgegebenen Suchraums nach den an diesen Knoten entstehenden Kosten von Sollbahnen, die von einem ersten Knoten und einem zweiten Knoten ausgehen, und Ermittlung von Kosten-günstigen Sollbahnen die von jeweils einem Referenzknoten ausgehen,
(b) Bildung von Kosten-günstigen Sollbahnen, die zwischen einem ersten und einem zweiten Referenzknoten W1, W2 verlaufen, aus zumindest einer Kombination von Sollbahn-Abschnitten, die vom ersten bzw. vom zweiten Knoten zu einem Schnittpunkt Kosten-günstigen Sollbahnen verlaufen,
(c) Auswahl einer zwischen ersten und zweiten Knoten W1, W2 verlaufenden Kosten-optimierten Sollbahn aus den möglichen Kombinationen von Sollbahn-Abschnitten, die vom ersten bzw. vom zweiten Knoten ausgehen, aufgrund eines vorgegebenen Kriteriums,
sowie System zur Ermittlung optimierter Bahnen eines Fahrzeugs.

## Beschreibung

Die Erfindung betrifft ein zur Implementierung in ein Computersystem vorgesehenes Verfahren zur Ermittlung optimierter Soll-Bahnen eines Fahrzeugs sowie ein System zur Ermittlung einer Sollbahn.

Das Fahrzeug kann eine Land-, Wasser- oder Luftfahrzeug sein, wobei letzteres wiederum z.B. ein bemanntes oder unbemanntes Flugzeug, eine Rakete, ein Missile oder eine Drohne sein kann.

Aus der Veröffentlichung "Algorithmische Graphentheorie" von Volker Turau, Addison-Wesley 1996 ist ein Algorithmus bekannt, mit dem eine nach bestimmten Optimierungskriterien optimale Bahn zwischen einem Startpunkt und einem Zielpunkt ermittelt werden kann. Nach dem bekannten Verfahren erfolgt eine Bahnweg-Planung zwischen einem vorgegebenen Startpunkt und einem vorgegebenen Zielpunkt auf einem durch einen Graphen oder ein Gitter modellierten Bereich.

Ausgehend vom Startpunkt werden die Wege zu jedem benachbarten Gitterpunkt oder Nachbarpunkt nach den Optimierungs-Kriterien untersucht. In den Nachbarpunkten werden die ermittelten Kosten und die hinführenden Wege gespeichert. Dieses Verfahren wird wiederum für Nachbarpunkte dieser vorangegangenen Nachbarpunkte wiederholt, es werden in jedem dieser Punkte nur jeweils die günstigsten Kosten und der dazugehörige Weg gespeichert. Diese schrittweise Ermittlung der günstigsten Wege wird fortgeführt, bis der günstigste Weg bis zum Zielpunkt ermittelt ist. Das Ergebnis ist der nach den vorgegebenen Optimierungskriterien optimale Weg vom Startpunkt zum Zielpunkt.

Dieses Verfahren ist in der Praxis verhältnismäßig aufwendig.

Es ist daher die Aufgabe der Erfindung, ein Verfahren bereit zu stellen, mit dem auf effiziente Weise eine Sollbahn-Optimierung durchgeführt werden kann.

Diese Aufgabe wird mit den Merkmalen des unabhängigen Patentanspruchs gelöst. Weitere Ausführungsformen sind in den auf diesen rückbezogenen Unteransprüchen angegeben.

Erfindungsgemäß wird ein Verfahren zur Ermittlung einer Sollbahn eines Fahrzeugs in einem Navigationssystem mit folgenden Schritten vorgeschlagen:
(a) Bewertung sämtlicher Knoten oder Gitterpunkte des vorgegebenen Suchraums nach den an diesen Knoten entstehenden Kosten von Sollbahnen, die von einem ersten Knoten und einem zweiten Knoten ausgehen, und Ermittlung von Kosten-günstigen Sollbahnen die von jeweils einem Referenzknoten ausgehen,
(b) Bildung von Kosten-günstigen Sollbahnen, die zwischen einem ersten und einem zweiten Referenzknoten verlaufen, aus zumindest einer Kombination von Sollbahn-Abschnitten, die vom ersten bzw. vom zweiten Knoten zu einem Schnittpunkt der betreffenden Kosten-günstigen Sollbahnen verlaufen,
(c) Auswahl einer zwischen ersten und zweiten Knoten verlaufenden Kostenoptimierten Soll bahn aus den möglichen Kombinationen von Sollbahn-Abschnitten, die vom ersten bzw. vom zweiten Knoten ausgehen, aufgrund eines vorgegebenen Kriteriums, wobei für einen in Punkt b) ermittelten Sollbahn-Abschnitt oder Folge von Sollbahn-Abschnitten die Bahn des Fahrzeugs zwischen den entsprechenden Knoten unter Berücksichtigung von Bewegungsgleichungen berechnet wird und nur solche Sollbahnen im Punkt c) ausgewählt werden, welche aufgrund der Bewegungsgleichungen innerhalb vorgebbarer Grenzen liegen und von dem Fahrzeug physikalisch fahrbar sind.

Bei dem zur Implementierung in ein Computersystem vorgesehenen Verfahren zur Ermittlung optimierter Bahnen kann insbesondere vorgesehen sein, dass bei der Ermittlung der zumindest einen Kosten-günstigen Sollbahn ausgehend von dem jeweiligen Referenzknoten schrittweise Knoten des vorgegebenen Suchraums nach den an diesen Knoten entstehenden Kosten bewertet und an jedem Knoten derjenige Sollbahn-Abschnitt ausgewählt wird, der am Kostengünstigsten ist.

Es kann vorgesehen sein, dass das Verfahren für die Ermittlung der Kosten-günstigen Sollbahn alternativ bei der Erfüllung von folgenden Kriterien beendet wird:
- sobald die ermittelten Kosten-günstigen Sollbahnen einen vorgegebenen Ausdauerwert oder eine generalisierte Weglänge für den zurückgelegten Weg des Fahrzeugs überschreiten;
- sobald eine oder mehrere Kosten-günstige Sollbahnen den jeweils anderen Referenzpunkt erreicht haben;
- sobald ein oder mehrere Schnittpunkte von Kosten-günstigsten Sollbahn-Abschnitten, die von verschiedenen Referenz-Knoten ausgehen, existieren;
- sobald sämtliche Knoten eines Suchraums bewertet worden sind.

Die Kosten können bei dem Verfahren bzw. dem System gebildet werden
- aus einem Bedrohungswert für das Fahrzeug, der insbesondere abgeleitet sein kann aus einer Maßzahl für die Möglichkeit oder Wahrscheinlichkeit für feindliche Waffeneinwirkung oder die Sichtbarkeit des Fahrzeugs oder Kombinationen dieser Größen;
- aus einem Ausdauerwert oder einer generalisierte Weglänge für den zurückgelegten Weg des Fahrzeugs, der bzw. die ermittelbar ist aus dem Treibstoffverbrauch oder der Weglänge oder der Fahrzeit des Fahrzeugs oder Kombinationen dieser Größen.
- aus dem Integral über die Bewegungen der Steuerorgane ermittelbar ist, wobei es hinsichtlich der Ausdauer oder Einsatzfähigkeit des Fahrzeugs das Ziel bestehen kann, den Steueraufwand zu minimieren.
- aus zusätzlichen Kosten in Form von heuristischen Termen, mit denen Eigenschaften des Problemraumes bestraft werden, welche nicht explizit als weitere Dimension modelliert werden sollen.

Erfindungsgemäß wird weiterhin ein System zur Ermittlung einer Sollbahn eines Fahrzeugs vorgeschlagen, das aufweist:
(a) ein Modul zur Bewertung sämtlicher Knoten oder Gitterpunkte des vorgegebenen Suchraums nach den an diesen Knoten entstehenden Kosten von Sollbahnen, die von einem ersten Knoten und einem zweiten Knoten ausgehen, und Ermittlung von Kosten-günstigen Sollbahnen die von jeweils einem Referenzknoten ausgehen,
(b) ein Modul zur Bildung von Kosten-günstigen Sollbahnen, die zwischen einem ersten und einem zweiten Referenzknoten verlaufen, aus zumindest einer Kombination von Sollbahn-Abschnitten, die vom ersten bzw. vom zweiten Knoten zu einem Schnittpunkt Kosten-günstigen Sollbahnen verlaufen,
(c) ein Auswahl-Modul zur Auswahl einer zwischen ersten und zweiten Knoten verlaufenden Kosten-optimierten Sollbahn aus den möglichen Kombinationen von Sollbahn-Abschnitten, die vom ersten bzw. vom zweiten Knoten ausgehen, aufgrund eines vorgegebenen Kriteriums.

Ein Vorteil der Erfindung ist, dass der Rechenaufwand durch Verringerung der Dimension des Suchproblems um eine Dimension und insbesondere um die Fahrtzeit reduziert werden kann.

Im folgenden wird die Erfindung anhand der beiliegenden Figuren beschrieben, die zeigen:
- Figur 1 eine schematische Darstellung des Suchraumes bei der erfindungsgemäßen Ermittlung von Kosten-günstigen Sollbahnen,
- Figur 2 eine schematische Darstellung des Suchraumes nach Aufbau der Kosten-günstigen Sollbahnen.

Mit dem erfindungsgemäßen Verfahren wird eine Kosten-optimierte Sollbahn für ein Fahrzeug und insbesondere Flugzeug auf einem Gitter oder einer regelmäßigen oder unregelmäßigen Verteilung von Gitterpunkten oder Knoten auf einem Suchgebiet zwischen zwei Referenzpunkten oder Wurzeln W1, W2 und insbesondere zwischen einem vorgegebenen Startpunkt und einem vorgegebenen Zielpunkt generiert. Bei dem Verfahren werden einerseits von einem ersten Referenzpunkt aus und andererseits von einem zweiten Referenzpunkt aus zunächst jeweils zumindest eine Kosten-günstige Sollbahn und vorzugsweise mehrere Kosten-günstige Sollbahnen ermittelt. Die Ermittlung der zumindest einen Kosten-günstigen Sollbahn erfolgt aufgrund einer Bewertung sämtlicher Knoten oder Gitterpunkte des vorgegebenen Suchraums nach den an den Kanten zwischen den Knoten entstehenden Kosten von möglichen Sollbahnen. Aus einer Kombination dieser Kosten-günstigen Sollbahnen und in letzterem Fall aus einer Auswahl dieser Kosten-günstigen Sollbahnen wird eine Kosten-optimierte Bahn zwischen zwei Wurzeln oder vom Startpunkt zum Zielpunkt führende Sollbahn ermittelt.

Die zumindest eine Kosten-günstige Sollbahn ist in einer bevorzugten Ausführungsform der Erfindung eine Kosten-optimale Sollbahn.

Bei einer visuellen Darstellung der Sollbahnen von oben haben die Sollbahnen, die von einem ersten Referenzpunkt ausgehend, die Gestalt von Ästen eines Baums oder von Ästen einer Verzweigungs-Struktur, wobei der erste Referenzpunkt im unteren Bereich des Stammes oder im Wurzelbereich desselben, nachfolgend auch kurz erste Wurzel W1 genannt, gelegen ist. Ebenso haben die vom zweiten Referenzpunkt ausgehenden Sollbahnen die Gestalt eines Baumes oder einer Verzweigungs-Struktur mit einem zweiten Referenzpunkt oder einer zweiten Wurzel W2. Die Schnittpunkte der Bäume oder der Verzweigungs-Strukturen sind mögliche Kopplungspunkte, an denen die Äste, d.h. die von verschiedenen Wurzeln W1, W2 ausgehenden Kosten-günstigen Sollbahnen miteinander zu den beiden Referenzpunkten oder Wurzeln W1, W2 verbindenden Sollbahnen verbunden werden können. Im Extremfall kann eine VerzweigungsStruktur auch nur eine Kostengünstige Sollbahn aufweisen. Aus den möglichen Kombinationen der zumindest einen Kosten-günstigen Sollbahn oder der Kosten-günstigen Sollbahnen, die von verschiedenen Wurzeln ausgeht bzw. ausgehen, werden nach vorbestimmten Kriterien eine Kosten-optimierte zwischen diesen Wurzeln W1, W2 oder Referenzpunkten verlaufende Sollbahn ausgewählt.

Dieses Verfahren kann kettenförmig zwischen zumindest einem der vorgenannten Referenzpunkte und zwischen einem weiteren Referenzpunkt einmal und dann wiederum in bezug auf weitere Referenzpunkte, also einmal oder mehrmals wiederholt werden.

Die Generierung der Kosten-optimierten Sollbahn erfolgt insbesondere mit Hilfe eines vorgegebenen, bereichsweise abgegrenzten Gitters mit Gitterpunkten oder Knoten, das in einem vorgegebenen Graphen oder Suchraum D den relevanten Bereich oder das relevante Gelände modelliert, und mit Hilfe von Bewegungsgleichungen zur Beschreibung möglicher Übergänge des Flugzeugs zwischen den Gitterpunkten.

Der Graph oder Suchraum D in Form eines Gitters vorgegebener Ausdehnung wird gebildet aus einer Menge von Ecken oder Knoten, mit denen an diskreten möglichen Aufenthaltsorten Zustände des Systems modelliert sind, die durch Kanten miteinander verbunden sind, durch die als mögliche Wege zwischen den Orten Übergänge zwischen diesen Zuständen dargestellt werden. Für die Kanten sind Kosten in Form einer Zahl ermittelbar oder vorgegeben.

### Kosten (bzgl. der Kanten des Graphen)

Die Ermittlung der bei den Übergängen zwischen den Zuständen entstehenden Kosten, mit denen entschieden wird, welcher Weg von einem Knoten ausgehend als Bestandteil der Kosten-günstigen Sollbahn verwendet wird, kann aufgrund folgender Einflussgrößen oder Parameter erfolgen:
- ein Bedrohungswert für das Fahrzeug, der insbesondere abgeleitet sein kann aus einer Maßzahl für die Möglichkeit oder Wahrscheinlichkeit für feindliche Waffeneinwirkung oder die Sichtbarkeit des Fahrzeugs oder Kombinationen dieser Größen;
- ein Ausdauerwert oder eine generalisierte Weglänge für den zurückgelegten Weg des Fahrzeugs, der ermittelbar ist aus dem Treibstoffverbrauch oder der Weglänge oder der Fahrzeit des Fahrzeugs oder Kombinationen dieser Größen;
- einen Steueraufwand für den Übergang zwischen zwei jeweiligen Zuständen, der aus dem Integral über die Bewegungen der Steuerorgane ermittelbar ist, wobei es hinsichtlich der Ausdauer oder Einsatzfähigkeit des Fahrzeugs das Ziel bestehen kann, den Steueraufwand zu minimieren.
- zusätzliche Kosten in Form von heuristischen Termen, mit denen Eigenschaften des Problemraumes bestraft werden, welche nicht explizit als weitere Dimension modelliert werden sollen. Dies kann der Verringerung der Komplexität des aus der Erfindung resultierenden Rechenverfahrens und der damit erforderlichen Rechenzeit und des erforderlichen Speicherplatzes dienen.

Die zuletzt genannten zusätzlichen Kosten können als eine Art Bestrafungsterm verwendet werden, um die Extrema dieser Eigenschaften zu verteuern. Der Algorithmus verfälscht mit diesen zusätzlichen Kosten das Optimum. Zur Kompensation können auch Korrekturfunktionen eingesetzt werden.

In einer bevorzugten Ausführungsform der Erfindung wird die Fahrtzeit des Fahrzeugs bzw. die Flugzeit des Flugzeugs nicht als Zustand behandelt, sondern als Randbedingung gefordert, dass die Flugzeit der Gesamtbahn bis auf eine gewisse Toleranz einem vorgegebenen Wert entspricht. Mit dieser Randbedingung kann die Auswahl der Kosten-optimierten Sollbahn von den Kosten-günstigen Sollbahnen vorgenommen werden.

Ein Beispiel ist die Anwendung der Erfindung für ein Modul zur Ermittlung einer Sollbahn für ein Flugzeug zum Zwecke des Geländefolgeflugs. Dabei kann insbesondere vorteilhaft sein, die Flughöhe nicht vollständig in den Zuständen zu repräsentieren und starke Änderungen der Geländehöhe mit einem zusätzlichen Kostenbetrag zu bestrafen oder kostenmäßig zu addieren, wenn das Flugzeug aufgrund der Flugleistungen, die in Form von Bewegungsgleichungen berücksichtigt werden, einem Sollbahn-Verlauf nicht folgen kann.

Bei dem erfindungsgemäßen Verfahren wird eine Kostenvariable verwendet, so dass bei der Verwendung mehrerer Kostenanteile die verschiedenen Kostenanteile in vorbestimmter Weise abhängig vom jeweiligen Anwendungsfall in dieser einen Kosten-Variablen gewichtet werden müssen.

Bei dem erfindungsgemäßen Verfahren zur Sollbahn-Generierung für ein Fahrzeug werden mit Hilfe von Zuständen zulässige Bewegungsmöglichkeiten des Fahrzeugs vorgegeben, um bei der Bildung der alternativen Kosten-günstigen Sollbahnen und den weiteren Verfahrensschritten nur solche Sollbahnen zu berücksichtigen, die für das Fahrzeug fahrbar bzw. für das Flugzeug insbesondere aufgrund der Flugleistungen oder Flugphysik fliegbar ist. Der am jeweiligen Aufenthaltsort ermittelte oder vorgegebene Zustand des Fahrzeugs kann aus folgenden Bestandteilen oder Teilzuständen gebildet sein:
- die Position des Fahrzeugs in Nord- oder Südrichtung;
- die Position des Fahrzeugs in Ost- oder Westrichtung oder lateral;
- die Höhe des Fahrzeugs über einer Referenz-Höhe,
- die Ausrichtung des Flugzeugs im Raum und insbesondere die Fahrtrichtung bzw. die Flugrichtung eines Flugzeugs, wobei im Anwendungsfall für ein Flugzeug auch weitere damit zusammenhängende Größen wie sämtliche Flugzustandsgrößen, also z.B. der Rollwinkel verwendet werden können und wobei die Zuordnung der Ausrichtung auf den jeweiligen Knoten auf verschiedene Weise und insbesondere durch Verwendung des Wertes beim Übergang von vorhergehenden zum jeweils betrachteten Knoten erfolgen kann;
- ein zeitabhängiger Bedrohungswert insbesondere für Bedrohungen, die erst gefährlich werden, wenn sie eine Zeit andauern, wobei die zeitabhängige Bedrohung durch einen Teilzustand modelliert wird, der sich über die (bedrohte) Zeit ändert;
- die Geschwindigkeit des Fahrzeugs, um zu berücksichtigen, dass sich bei unterschiedlichen Geschwindigkeiten die Bewegungsgleichungen des Fahrzeugs ändern können; bei der Anwendung des Verfahrens auf ein Flugzeug kann durch die Geschwindigkeit auch das dynamische Steigvermögen dargestellt werden;
- weitere Zustände je nach Anwendungsfall.

Die Bewegungsgleichungen des Fahrzeugs bzw. Flugzeugs werden als Bewegungsmöglichkeiten des Fahrzeugs behandelt und werden an jedem Zustandspunkt oder Knoten verwendet zur Definition der jeweils möglichen Zustandsübergänge, d.h. der möglichen Kanten im Graphen. Das bedeutet, dass die im Verlauf der Sollbahn vorhergehende Zustandsänderung entlang einer Kante die darauffolgende Zustandänderung begrenzen kann, soweit diese über eine aufgrund der Bewegungsgleichungen zulässige Grenze hinausgeht.

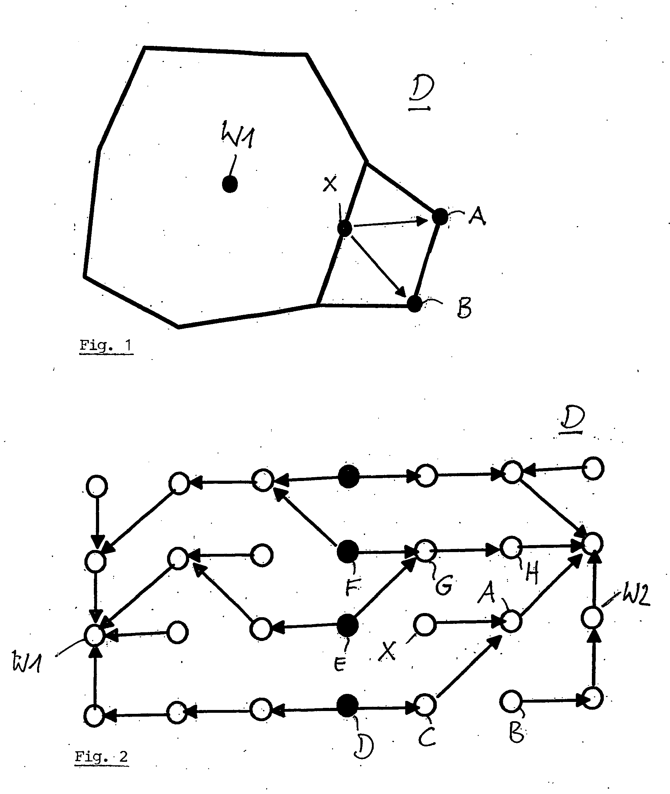

Bei dem erfindungsgemäßen Verfahren zur Generierung einer Kosten-günstigen Sollbahn wird von einem vorgegebenen Suchraum D ausgegangen (Figur 1). Der Algorithmus zur Ermittlung optimierter Bahnen oder Wege wird zwischen einem ersten und einem zweiten Referenzpunkt oder zwischen zwei Wurzeln W1, W2 entwickelt, die Bestandteile des Graphen oder Menge der Gitterpunkte sind.

In einem ersten Schritt wird für zwei Referenzknoten oder Referenzpunkte jeweils zumindest eine Kosten-günstige Sollbahn ermittelt, wobei zumindest eine Kostengünstige Sollbahn jeweils von jedem Referenzknoten aus verläuft. Bei der Ermittlung der zumindest einen Kosten-günstigen Sollbahn werden bei einer Bahn ausgehend von dem jeweiligen Referenzknoten vorzugsweise sämtliche Knoten oder Gitterpunkte des vorgegebenen Suchraums nach den an diesen Knoten entstehenden Kosten bewertet und an jedem Knoten derjenige Weg zum nächsten Knoten ausgewählt, der am Kosten-günstigsten ist. Im Normalfall ergeben sich durch die einzelnen erfindungsgemäßen Schritte eine Mehrzahl von Kosten-günstigen Sollbahnen. Bei der Bildung mehrerer Kosten-günstiger Sollbahnen, haben diese bei einer visuellen Darstellung eine von der jeweiligen Wurzel W1 oder W2 ausgehende Verzweigungsstruktur oder ein Baum, deren oder dessen Anfang in den jeweiligen Referenzpunkten oder Wurzeln liegt.

Jede Kosten-günstige Sollbahn stellt somit eine Abfolge von Kosten-günstigen Wegen dar, die von einem Referenzpunkt aus zwischen Zustandspunkten einer vorgegebenen Menge D verlaufen. Jede Kosten-günstige Sollbahn wird dadurch ermittelt, dass schrittweise bei jedem Knoten entschieden wird, welcher benachbarte Knoten des Suchraums D als nächster Bahnpunkt verwendet wird. Dabei wird derjenige benachbarte Knoten als nächster Wegpunkt identifiziert, an dem sich die geringsten Kosten ergeben.

In einer bevorzugten Ausführungsform der Erfindung erfolgt die Ermittlung der Kosten-günstigen Sollbahnen über vom jeweiligen Referenzkonten aus wachsende oder sich verlängernde Sollbahn-Abschnitte wie folgt:
Bei einem Kosten-günstigen Sollbahn-Abschnitt, die vom ersten oder zweiten Referenz-Punkt ausgeht und in einem Rechenschritt als Endpunkt den Punkt X aufweist, der im Startpunkt der Referenzpunkt selbst ist, werden in den nächsten Rechen-Schritten die Kosten an jedem nachfolgenden Knoten A, B, C, D, E, F, G, H bestimmt und jedem nachfolgenden Knoten ein vom jeweiligen Referenzpunkt ausgehender und im jeweiligen nachfolgenden Knoten endender Sollbahn-Abschnitt zugeordnet. Jenachdem, welche Kosten geringer sind, kann der in einem jeweils nachfolgenden Knoten endende Sollbahn-Abschnitt über den Knoten X oder nicht über diesen Knoten X verlaufen.

Dabei werden die Kosten ermittelt, die entstehen, wenn das Fahrzeug von dem Knoten X zu jedem der möglichen nachfolgenden Punkte A, B, C, D, E, F, G, H bewegt wird, und diese Teil-Kosten den im Knoten X bereits aufgelaufenen Kosten hinzuaddiert. Jedem nachfolgenden Knoten, z.B. dem nachfolgenden Knoten A werden die Kosten zugeordnet, die bei dem Kosten-günstigsten zu dem Knoten A führenden Sollbahn-Abschnitt entstanden sind. Falls an diesem Rechenschritt sonst noch kein zu dem Knoten A führender Kosten-günstiger Sollbahn-Abschnitt existiert, werden dem Knoten A diejenigen Kosten zugeordnet, die für den über den Knoten X führenden Sollbahn-Abschnitt angefallen sind.
Falls hingegen bereits ein zu dem Knoten A führender Kosten-günstiger Sollbahn-Abschnitt existiert, werden die im Knoten X aufgrund des bereits existierenden Sollbahn-Abschnitts entstandenen Kosten mit den aufgrund des über den Knoten A führenden Sollbahn-Abschnitt verglichen und dem Knoten A die geringeren Kosten zugeordnet. Außerdem wird in dem Knoten A derjenige zu diesem Knoten hinführende Sollbahn-Abschnitt als der im jeweiligen Rechenschritt Kosten-günstigste Sollbahn-Abschnitt registriert, der zu den geringeren Kosten im Knoten A geführt hat.

Dieses Verfahren wird dann in bezug auf jeden bereits existierenden, zum Knoten A hinführenden Sollbahn-Abschnitt durchgeführt. Auf diese Weise wird ausgehend von einem Knoten X der im jeweiligen Rechenschritt Kosten-günstigste Sollbahn-Abschnitt zu einem Nachbar-Knoten des Knotens X (im Beispiel der Knoten A) vorgenommen. Dieses Verfahren wird dann noch für jeden weiteren Nachbarpunkt von X durchgeführt, so dass für jeden Nachbar-Knoten von X der zu diesem Nachbar-Knoten hinführende Sollbahn-Abschnitt ermittelt wird.

Auf diese Weise wird in nachfolgenden Rechenschritten an jedem Knoten des Suchraums der jeweils von dem jeweiligen Referenzpunkt ausgehende und zu dem jeweiligen Knoten hinführende Sollbahn-Abschnitt ermittelt, der an diesem Knoten der für den Rechenschritt der Kosten-günstigste ist. In bezug auf jeden jeweils Kostengünstigsten Sollbahn-Abschnitt werden in jedem Knoten auch die an diesem aufgelaufenen Kosten registriert.

Rechentechnisch werden jedem Referenzknoten oder jeder Wurzel W1, W2 werden dabei vorzugsweise die Kosten 0 zugeordnet. Außerdem ist vorzugsweise vorgesehen, dass die Kosten z.B. in bezug auf Knoten A gespeichert werden, wobei dieser Knoten bereits über einen anderen Weg erreicht worden sein kann, so dass für diesen Knoten bereits Kosten eingetragen sind. In diesem Fall werden gegebenenfalls die zuvor an diesem Knoten gespeicherten Kosten überschrieben, wenn der Sollbahn-Abschnitt, für den die Kosten im jeweiligen Rechenschritt ermittelt werden, im Knoten A Kosten-günstiger ist als eine andere Bahn, die zu diesem Knoten A hinführt. Im anderen Fall werden die Kosten des im jeweiligen Rechenschritt verlängerten Sollbahn-Abschnitts im nachfolgenden Knoten A eingetragen. Der Knoten X wird in diesem Fall zusätzlich als letzter Vorgänger zusammen mit dessen Vorgängern gespeichert. War in A schon ein anderer Vorgänger eingetragen, so wird er durch denjenigen Vorgänger ersetzt, über den ein Kosten-günstigerer Sollbahn-Abschnitt verläuft, so dass ein schlechterer Sollbahn-Abschnitt durch einen besseren Sollbahn-Abschnitt ersetzt wird.

Bei einem Übergang von einem Knoten zu einem nächsten Knoten in einer optimierten Sollbahn kann jedoch nur derjenige nachfolgende Knoten E1 ausgewählt werden, der in Bezug auf den Bezugs-Knoten E eine in Hinsicht auf die Bewegungsgleichungen zulässige Folge von einem Zustandsübergang darstellt. Als zulässige oder mögliche Zustandsübergänge werden diejenigen Zustandsänderungen für das weitere Berechnungsverfahren zugelassen, die innerhalb der aufgrund der Bewegungsgleichungen zulässigen Grenze liegen. In bestimmten Anwendungsfällen können noch Zustandsänderungen von weiteren Vorgängern in den Bewegungsgleichungen berücksichtigt werden.

In einer bevorzugten Ausführungsform der Erfindung wird ausgehend von einem Zustandsknoten E jeweils der Übergang zu sämtlichen möglichen Zustandsknoten in Hinsicht auf die dabei entstehenden zusätzlichen Kosten und die sich ergebende Fahrzeit ermittelt. Rechentechnisch wird in bezug auf die Kanten zwischen den jeweiligen Knoten neben den Kosten auch die Fahrzeit bzw. die Flugzeit für die Bahn des Fahrzeugs oder eine äquivalente Größe bis zu diesem Knoten vermerkt. Analog zu den Kosten wird auch die Flugzeit in den Knoten aufaddiert und in bezug auf jeden Knoten gespeichert. Nach Ermittlung der Kosten-günstige Sollbahnen sind für jeden Knoten die Kosten, die Fahr- oder Flugzeit und der benachbarte Gitterpunkt gespeichert, der in bezug auf die jeweilige Wurzel W1, W2 der Vorgänger in der Kosten-günstigen Sollbahn ist.

Das Verfahren für die Ermittlung der Kosten-günstigen Sollbahn kann alternativ insbesondere nach bestimmten Kriterien beendet werden:
- sobald die ermittelten Kosten-günstigen Sollbahnen einen vorgegebenen Ausdauerwert oder eine generalisierte Weglänge für den zurückgelegten Weg des Fahrzeugs überschreiten;
- sobald eine oder mehrere Kosten-günstige Sollbahnen den jeweils anderen Referenzpunkt erreicht haben;
- bei gleichzeitiger Ermittlung der jeweils Kosten-günstigsten Sollbahn-Abschnitte von beiden Referenz-Knoten aus, sobald ein oder mehrere Schnittpunkte von Kosten-günstigsten Sollbahn-Abschnitten, die von verschiedenen Referenz-Knoten ausgehen, existieren;
- sobald sämtliche Knoten eines Suchraums bewertet worden sind.

Der Schritt der Ermittlung der Kosten-günstigen Sollbahnen ist vorzugsweise dann abgeschlossen, wenn der vorgegebene Suchraum D abgesucht ist, d.h. für sämtliche Knoten desselben die möglichen Übergänge zwischen Knoten nach Kosten evaluiert worden sind. Nach diesem Schritt sind in bezug auf sämtliche von der jeweiligen Wurzel W1, W2 erreichbaren Knoten des Graphen mit Kosten und Flugzeiten oder Weglängen versehen. Außerdem ist für jeden dieser Knoten aufgrund der Speicherung des Vorgängers dieses Knotens eine eindeutige, von der jeweiligen Wurzel ausgehende Kosten-günstige Sollbahn bestimmt, bei der eine rekursive-Verfolgung der Vorgänger bis zur Wurzel erfolgen kann. Die Kanten zwischen aufeinanderfolgenden oder benachbarten Knoten sind nicht mehr durch die Bewegungsgleichungen definiert, sondern explizit durch die Verweise auf die Vorgängerknoten.

In einem zweiten Schritt werden aus einer Auswahl dieser von jeweils einer Wurzel ausgehenden Kosten-günstigen Sollbahnen zumindest eine Kostenoptimierte Sollbahn und im Normalfall eine Mehrzahl von Kosten-optimierten Sollbahnen ermittelt. Dabei werden Schnittpunkte von Kosten-günstigen Sollbahnen, die von verschiedenen Wurzeln W1, W2 ausgehen, als Verbindungspunkte für die Kombination der jeweiligen Sollbahn-Abschnitte verwendet. Es werden also in bezug auf die Schnittpunkte von Kosten-günstigen Sollbahnen mit verschiedenen Wurzeln die möglichen Kombinationen von BahnAbschnitten gebildet, die von den jeweiligen Wurzeln W1, W2 zum Schnittpunkt verlaufen. Diese Kombinationen von Abschnitten Kosten-günstiger Sollbahnen, die von einer Wurzel ausgehen, bilden zwischen den jeweiligen Wurzeln W1, W2 verlaufende Kosten-günstige Sollbahnen.

In einem dritten Schritt wird aus möglichen zwischen den Wurzeln W1, W2 verlaufenden Kosten-günstigen Sollbahnen aufgrund zumindest eines vorbestimmten Kriteriums eine Kosten-optimierte Sollbahn ausgewählt welche die Fahrzeitbedingung erfüllt.

Dies kann in einem Anwendungsfall aufgrund einer vorgegebenen Weglänge oder Fahrzeit erfolgen. Das Kriterium kann dabei derart angewendet werden, dass eine Fahrtzeit oder Fahrtstrecke innerhalb vorgegebener Grenzen erreicht, unterschritten oder übertroffen wird. Von allen kombinierten Sollbahnen, welche die Fahrzeitbedingung erfüllen, wird dann eine kostenoptimierte als Gesamtergebnis ausgewählt.

Auf diese Weise kann eine Sollbahn-Optimierung aufgrund von Nebenbedingungen erfolgen.

Dieser Vorgang der Ermittlung eine Kosten-optimierten Sollbahn aus einer Anzahl von Kosten-günstigen Sollbahnen zwischen zwei ersten Referenz-Knoten oder Wurzeln W1, W2 kann mehrmals zwischen einem der Referenz-Knoten und einem weiteren Referenz-Knoten wiederholt werden, wobei jeweils einer der beiden ersten Referenz-Knoten der Ausgangspunkt für die Entwicklung von Kosten-günstigen Sollbahnen sowie Kosten-optimalen Sollbahnen zu zwei verschiedenen Wurzeln ist. Auf diese Weise kann mit dem erfindungsgemäßen Verfahren eine Kosten-optimierte Sollbahn zwischen insgesamt drei Wurzeln ermittelt werden. Wenn dieses Verfahren zur Ermittlung einer Kosten-optimierten Sollbahn aus einer Anzahl von Kosten-günstigen Sollbahnen wiederum wiederholt wird, kann die Zahl der Referenz-Knoten Wurzeln noch weiter erhöht werden, zwischen denen eine oder mehrere Kosten-optimierte Sollbahnen gebildet werden.

Erfindungsgemäß ist ferner ein System zur Ermittlung einer Sollbahn bereitgestellt, in dem das erfindungsgemäße Verfahren implementiert ist. Das System kann für ein bemanntes oder ein unbemanntes Fahrzeug verwendet werden. Ein solches System kann ein Planungssystem sein, das die ermittelte Sollbahn einem Bahnführungssystem zuführt.

Ein solches System weist insbesondere ein Modul mit Funktionen zur Bewertung sämtlicher Knoten oder Gitterpunkte des vorgegebenen Suchraums nach den an diesen Knoten entstehenden Kosten von Sollbahnen auf, die von einem ersten Knoten und einem zweiten Knoten ausgehen. Dieses Modul weist ferner Funktionen auf zur Ermittlung von Kosten-günstigen Sollbahnen, die von jeweils einem Referenzknoten ausgehen.

Das System weist außerdem ein Modul mit Funktionen zur Bildung von Kosten-günstigen Sollbahnen auf, die zwischen einem ersten und einem zweiten Referenzknoten W1, W2 verlaufen. Die Bildung von Kosten-günstigen Sollbahnen erfolgt dabei aus zumindest einer Kombination von Sollbahn-Abschnitten, die vom ersten bzw. vom zweiten Knoten zu einem Schnittpunkt Kosten-günstigen Sollbahnen verlaufen.

Auch umfasst das System ein Auswahl-Modul mit Funktionen zur Auswahl einer zwischen ersten und zweiten Knoten W1, W2 verlaufenden Kosten-optimierten Sollbahn aus den möglichen Kombinationen von Sollbahn-Abschnitten, die vom ersten bzw. vom zweiten Knoten ausgehen, aufgrund eines vorgegebenen Kriteriums.

## Patentansprüche

1. Verfahren zur Ermittlung einer Sollbahn eines Fahrzeugs in einem Navigationssystem umfassend folgende Schritte:
a. Bewertung sämtlicher Knoten oder Gitterpunkte des vorgegebenen Suchraums nach den an diesen Knoten entstehenden Kosten von Sollbahnen, die von einem ersten Knoten und einem zweiten Knoten ausgehen, und Ermittlung von Kosten-günstigen Sollbahnen die von jeweils einem Referenzknoten ausgehen,
b. Bildung von Kosten-günstigen Sollbahnen, die zwischen einem ersten und einem zweiten Referenzknoten (W1, W2) verlaufen, aus zumindest einer Kombination von Sollbahn-Abschnitten, die vom ersten bzw. vom zweiten Knoten zu einem Schnittpunkt der betreffenden Kosten-günstigen Sollbahnen verlaufen,
c. Auswahl einer zwischen ersten und zweiten Knoten (W1, W2) verlaufenden Kosten-optimierten Sollbahn aus den möglichen Kombinationen von Sollbahn-Abschnitten, die vom ersten bzw. vom zweiten Knoten ausgehen, aufgrund eines vorgegebenen Kriteriums, **dadurch gekennzeichnet, dass**
für einen in Punkt b) ermittelten Sollbahn-Abschnitt oder Folge von Sollbahn-Abschnitten die Bahn des Fahrzeugs zwischen den entsprechenden Knoten unter Berücksichtigung von Bewegungsgleichungen berechnet wird und nur solche Sollbahnen im Punkt c) ausgewählt werden, welche aufgrund der Bewegungsgleichungen innerhalb vorgebbarer Grenzen liegen und von dem Fahrzeug physikalisch fahrbar sind.

2. Verfahren nach dem Patentanspruch 1, **dadurch gekennzeichnet, dass** bei der Ermittlung der zumindest einen Kosten-günstigen Sollbahn ausgehend von dem jeweiligen Referenzknoten schrittweise Knoten des vorgegebenen Suchraums nach den an diesen Knoten entstehenden Kosten bewertet und an jedem Knoten derjenige Sollbahn-Abschnitt ausgewählt wird, der am Kostengünstigsten ist.

3. Verfahren nach dem Patentanspruch 1 oder 2, **dadurch gekennzeichnet, dass** das Verfahren für die Ermittlung der Kosten-günstigen Sollbahn beendet wird, sobald die ermittelten Kosten-günstigen Sollbahnen einen vorgegebenen Ausdauerwert oder eine generalisierte Weglänge für den zurückgelegten Weg des Fahrzeugs überschreiten.

4. Verfahren nach dem Patentanspruch 1 oder 2, **dadurch gekennzeichnet, dass** das Verfahren für die Ermittlung der Kosten-günstigen Sollbahn beendet wird, sobald eine oder mehrere Kosten-günstige Sollbahnen den jeweils anderen Referenzpunkt erricht haben.

5. Verfahren nach dem Patentanspruch 1 oder 2, **dadurch gekennzeichnet, dass** das Verfahren für die Ermittlung der Kosten-günstigen Sollbahn beendet wird, bei gleichzeitiger Ermittlung der jeweils Kostengünstigsten Sollbahn-Abschnitte von beiden Referenz-Knoten aus, sobald ein oder mehrere Schnittpunkte von Kosten-günstigsten Sollbahn-Abschnitten, die von verschiedenen Referenz-Knoten ausgehen, existieren.

6. Verfahren nach dem Patentanspruch 1 oder 2, **dadurch gekennzeichnet, dass** das Verfahren für die Ermittlung der Kosten-günstigen Sollbahn beendet wird, sobald sämtliche Knoten eines Suchraums bewertet worden sind.

7. Verfahren nach einem der vorangehenden Patentansprüche, **dadurch gekennzeichnet, dass** die Kosten gebildet werden aus einem Bedrohungswert für das Fahrzeug, der insbesondere abgeleitet sein kann aus einer Maßzahl für die Möglichkeit oder Wahrscheinlichkeit für feindliche Waffeneinwirkung oder die Sichtbarkeit des Fahrzeugs oder Kombinationen dieser Größen.

8. Verfahren zur nach einem der vorangehenden Patentansprüche, **dadurch gekennzeichnet, dass** die Kosten gebildet werden aus einem Ausdauerwert oder einer generalisierte Weglänge für den zurückgelegten Weg des Fahrzeugs, der bzw. die ermittelbar ist aus dem Treibstoffverbrauch oder der Weglänge oder der Fahrzeit des Fahrzeugs oder Kombinationen dieser Größen.

9. Verfahren nach einem der vorangehenden Patentansprüche, **dadurch gekennzeichnet, dass** die Kosten gebildet werden aus einem Steueraufwand für den Übergang zwischen zwei jeweiligen Zuständen, der aus dem Integral über die Bewegungen der Steuerorgane ermittelbar ist, wobei es hinsichtlich der Ausdauer oder Einsatzfähigkeit des Fahrzeugs das Ziel bestehen kann, den Steueraufwand zu minimieren.

10. Verfahren nach einem der vorangehenden Patentansprüche, **dadurch gekennzeichnet, dass** die Kosten gebildet werden aus zusätzlichen Kosten in Form von heuristischen Termen, mit denen Eigenschaften des Problemraumes bestraft werden, welche nicht expliziert als weitere Dimension modelliert werden sollen.
